# EUROPÄISCHE PATENTANMELDUNG

(11) **EP 1 437 182 A2**
(43) Veröffentlichungstag der Anmeldung: **14.07.2004**
(21) Anmeldenummer: 03029355.9
(22) Anmeldetag: 19.12.2003
(51) Int. Cl.: B05D 7/00, B05D 5/12

(54) **Elektrisch leitfähige Bodenbeschichtungen**

(30) Priorität: 07.01.2003 DE 10300459
(71) Anmelder: SGL Acotec GmbH, 56427 Siershahn (DE)
(72) Erfinder: Burkhart, Thomas, Dr., 56410 Montabaur (DE); Landau, Thorsten, 49479 Ibbenbüren (DE)

(57) **Zusammenfassung**

Bodenbeschichtungen gemäß § 19 h Wasserhaushaltsgesetz umfassend eine elektrisch leitfähige Grundierungsschicht und eine elektrisch leitfähige, flüssigkeitsdichte Deckschicht , Verfahren zu ihrer Herstellung und geeignete Beschichtungsformulierungen

## Beschreibung

Die Erfindung betrifft elektrisch leitfähige Bodenbeschichtungen insbesondere auf Basis von Epoxidharzen, bestehend aus einer Grundierung und einer elektrisch leitfähigen, flüssigkeitsdichten Deckschicht, und Beschichtungsformulierungen hierfür.

Für Industrieböden in Gebäuden, die zur Lagerung von umweltgefährdenden Flüssigkeiten dienen, wird eine besondere Bodenbeschichtung verlangt, die auch bei Rißbildung das Austreten solcher Flüssigkeiten in den Untergrund verhindert. Diese Böden müssen den Vorschriften des Wasserhaushaltsgesetzes (WHG, insbesondere § 19h) entsprechen. Dementsprechend nennt man solche Böden und die dafür verwendeten Beschichtungen auch WHG-Böden oder -Bodenbeschichtungen.

Den mechanischen und chemischen Anforderungen der Bestimmungen des WHG entsprechend werden bisher solche Bodenbeschichtungen eingesetzt, die zumindest aus einer Grundierung, aus einer elektrisch leitfähigen Zwischenschicht und einer elektrisch leitfähigen, flüssigkeitsdichten Deckschicht bestehen. Dieser Dreischichtaufbau kann auch in der Weise variieren, daß anstelle der leitfähigen Zwischenschicht eine leitfähige, dehnbare Tragschicht verwendet wird. Bei dieser Tragschicht handelt es sich üblicherweise um eine Schwimmschicht aus Kunstharzmasse, insbesondere Epoxidharzen oder Vinylesterharzen, in welche eine Armierung eingebettet wird. Diese Armierung ist als Waben- oder Gitterlage aus Glas, Metall, Pappe oder Kunstharz, insbesondere Polyester, ausgebildet. Am häufigsten werden Armierungen eingesetzt aus Glasfasermatten und/oder Glasfaser-Gewebe mit einem _{"}Flächengewicht" (flächenbezogener Masse, Massenbedeckung) von 200 bis 460 g/m², insbesondere 300 bis 450 g/m². Die elektrische Leitfähigkeit wird hergestellt durch Verwendung von Vliesen aus Kohlenstoffasern mit einer flächenbezogenen Masse von 20 bis 30 g/m², welche nach dem Einbetten der Matten als Abschluß auflaminiert werden. Danach kann die Deckschicht aufgebracht werden.

Die Beschichtungen werden hergestellt, indem Beschichtungsformulierungen enthaltende Bindemittel, Füllstoffe und gegebenenfalls Additive auf die zu beschichtenden Flächen aufgetragen und gehärtet werden. Die Bindemittel in den jeweiligen Beschichtungsformulierungen bestehen fast immer aus kalthärtenden Mischungen von Kunstharzen, insbesondere Epoxidharzen und aminischen Härtern.

Neben den jeweiligen Epoxidharzen und den angepaßten Härtern enthalten die Beschichtungsformulierungen noch Füllstoffe und Additive unter anderem zur Entlüftung, Benetzung und zur Verbesserung des Verlaufs.

Bei den aminischen Härtern handelt es sich um Addukte mit endständigen Aminogruppen aus Epoxidverbindungen und Aminen, wobei als Epoxidverbindungen hauptsächlich Diepoxide auf Basis von Bisphenol A und/oder Bisphenol F und als Aminkomponente aliphatische, cycloaliphatische, aromatisch-aliphatische Amine oder deren Mischungen, insbesondere Isophorondiamin und m-Xylylendiamin, eingesetzt werden. Diese sogenannten Addukthärter enthalten üblicherweise neben Benzylalkohol noch weitere Modifizierungsmittel und Beschleuniger.

Die so erhaltenen Epoxidharzformulierungen werden als selbstverlaufende Bodenbeschichtungen in Schichtdicken von bis zu 3 mm appliziert. Die gewünschte elektrische Leitfähigkeit wird durch Zusatz von leitfähigen Füllstoffen wie Ruß, Graphit, Metallpulver oder Kohlenstoffasern zu der Epoxidharzformulierung erreicht.

Das Aufbringen dieser dreischichtigen Beschichtungen ist arbeitsintensiv und bedingt lange Zeiten, in denen die zu beschichtenden Böden nicht begangen werden können. Gegenüber diesem Stand der Technik besteht daher die Aufgabe, solche Beschichtungssysteme bereitzustellen, die ohne negativen Einfluß auf die geforderten Eigenschaften in einer geringeren Zahl von Arbeitschritten, also in kürzerer Zeit, aufgetragen werden können.

Die Aufgabe wird gelöst durch leitfähige Beschichtungssysteme, in denen die Funktion der Grundierung und der Leitfähigkeitsschicht in einer Schicht kombiniert werden. Damit können leitfähige WHG-Bodenbeschichtungen hergestellt werden, die anstelle eines dreischichtigen Aufbaus nur noch einen zweischichtigen Aufbau erfordern.

Überraschenderweise wurde gefunden, daß eine leitfähig eingestellte Grundierungsschicht die bisher eingesetzte Kombination von leitfähige Zwischenschicht und Grundierung ersetzen kann.

Gegenstand der Erfindung sind daher Bodenbeschichtungen umfassend eine elektrisch leitfähige Grundierungsschicht und eine elektrisch leitfähige, flüssigkeitsdichte Deckschicht.

Eine Schicht wird im Rahmen der vorliegenden Erfindung als elektrisch leitfähig bezeichnet, wenn ihr Ableitwiderstand gemäß DIN 53482 und DIN 51953 weniger als 10⁹ Ohm, insbesondere für explosive Flüssigkeiten weniger als 10⁶ Ohm beträgt.

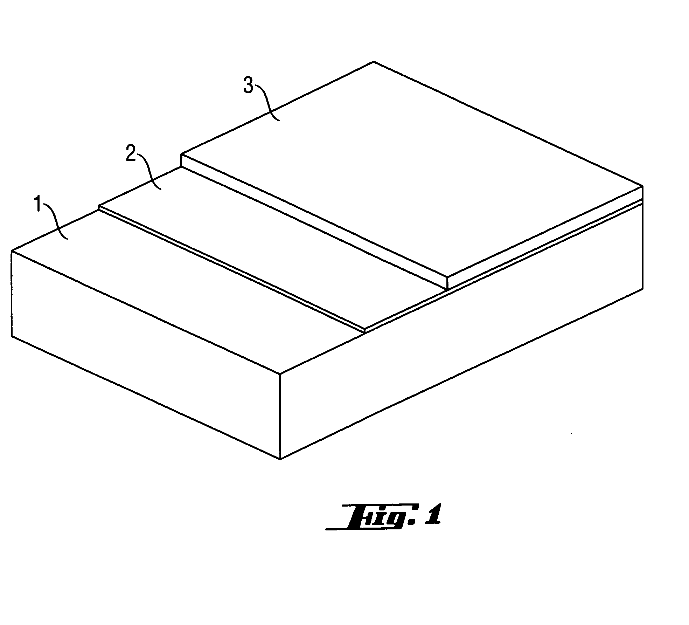

In der Fig. 1 wird der Aufbau des erfindungsgemäßen Beschichtungssystems erläutert. Dabei wird eine perspektivische Ansicht des Aufbaus auf einem Untergrund 1 gezeigt, wobei zur besseren Darstellbarkeit in der Figur der Untergrund 1 nur zum Teil mit der leitfähigen Grundierungsschicht 2 bedeckt ist, und die leitfähige Grundierungsschicht 2 danach ebenfalls nur zum Teil mit der Deckschicht 3 bedeckt ist.

Die Deckschicht 3 ist zusätzlich rißüberbrückend im Falle von WHG-Beschichtungen. Bei Beschichtungen, die nicht den Bestimmungen des WHG genügen müssen, genügt ein zweischichtiger leitfähiger Bodenbeschichtungsaufbau (Grundierung/Deckschicht), wobei die Deckschicht 3 nicht rißüberbrückend sein muß.

Als "rißüberbrückend" werden Schichten bezeichnet, die in sich keine Risse zeigen, wenn die unter ihnen befindliche Schicht einen Riß mit einer Breite von typischerweise 0,1 bis 0,5 mm, und höchstens 2 mm aufweist.

Die leitfähige Grundierung 2 kann grundsätzlich auf allen festen Untergründen 1 aufgebracht werden, besonders geeignet sind im Rahmen der WHG-Anforderungen Beton, Betonasphalt und Estrich.

Auf die leitfähige Grundierung 2 oder zwischen dieser und dem Untergrund 1 werden üblicherweise zur Verbesserung der Querleitfähigkeit ein oder mehrere gut elektrisch leitende Ableitbänder, Faserstränge, Folien oder Drähte aus Metall eingelegt, die vorteilhaft im Abstand von einigen Metern (1 bis 10 m), meist im Quadrat aufgeklebt oder leitfähig gespachtelt und elektrisch leitend miteinander verbunden werden. Eine Hauptader wird über die elektrische Erdleitung am Nullpotential angeschlossen.

Die Erfindung betrifft weiter Verfahren zur Herstellung der erfindungsgemäßen Bodenbeschichtungen sowie Beschichtungsformulierungen, mit denen die erfindungsgemäßen Beschichtungen hergestellt werden können.

In dem Verfahren zur Herstellung von Bodenbeschichtungen werden nacheinander eine Beschichtungsformulierung für eine elektrisch leitfähige Grundierungsschicht 2 und eine Beschichtungsformulierung für eine elektrisch leitfähige, flüssigkeitsdichte Deckschicht 3 auf einen Boden 1 aufgetragen und gehärtet.

Die Beschichtungsformulierung für die leitfähige Grundierung 2 besteht üblicherweise aus einem Bindemittel mit oder ohne Lösungsmittel und leitfähigen Füllstoffen. Diese Beschichtungsformulierung für die leitfähige Grundierung 2 wird bevorzugt gleichmäßig über die ganze zu beschichtende Fläche verteilt, günstige Schichtdicken liegen im Bereich von 0,05 bis 0,5 mm und insbesondere zwischen 0,1 und 0,3 mm. Dabei werden bevorzugt die folgenden Massenanteile verwendet: 5 bis 80 %, bevorzugt 20 bis 70 % Bindemittel, 1 bis 50 %, bevorzugt 5 bis 30 % Härter, 0 bis 25 %, bevorzugt 1 bis 23 % Lösungsmittel und 0,3 bis 30, bevorzugt 5 bis 28 % leitfähiger Füllstoff. Eine geeignete Zusammensetzung für die Beschichtungsformulierung für die Grundierung 2 enthält beispielsweise die folgenden Massenanteile der Komponenten:

| | |
|---|---|
| flüssiges Epoxidharz * | 40 % |
| Aminhärter # | 24% |
| Äthanol | 13 % |
| amorpher Naturgraphit+ | 23 % |

| | |
|---|---|
| * Epoxidharz auf Basis von Bisphenol A, Epoxidgruppengehalt 5,26 mol/kg, "Epoxidäquivalent" 190 g/mol | |
| # Epoxid-Amin-Addukt mit einer Aminzahl von 115 mg/g; (gemäß DIN 53176 der Quotient derjenigen Masse ***m*** _{KOH} an Kaliumhydroxid, die genausoviel Säure zur Neutralisation verbraucht wie eine zu untersuchende Probe, und der Masse ***m***_{B} dieser Probe (Masse des Feststoffes in der Probe bei Lösungen oder Dispersionen); ihre übliche Einheit ist "mg/g") | |
| + Korngröße 32 bis 75 µm | |

Als Bindemittel zur Realisierung einer elektrisch leitfähigen Grundierung 2 eignen sich Epoxidharze sowie wäßrige Dispersionen von Epoxidharzen, die, bezogen auf die Masse der Gesamtformulierung (Harz und Härter) bis zu 30 % Wasser, insbesondere 10 - 20 %, enthalten. Als Epoxidharzdispersionen eignen sich besonders kationische Epoxidharzdispersionen, die gleichzeitig als Härter für Epoxidharze vom Typ A eingesetzt werden. Weiterhin geeignet sind Emulsionen von Epoxidharzen.

Nach der Trocknung oder Aushärtung der Grundierung 2 wird gemäß der Erfindung auf diese die Beschichtungsformulierung für die leitfähige Deckschicht 3 aufgebracht, vorzugsweise in einer Schichtdicke zwischen 0,2 bis 5 mm, besonders günstig in einer Dicke zwischen 1 und 2 mm. Dies erfolgt beispielsweise mittels eines der Werkzeuge Kelle, Rakel, Traufel, Glätter, Zahnglätter oder Spritzpistole.

Falls gewünscht, kann nach Aushärtung der leitfähigen Deckschicht 3 noch eine Rutschhemmung aufgetragen werden, indem die bereits für die leitfähige Grundierung 2 benutzte Beschichtungsformulierung auf die leitfähige Deckschicht 3 mittels einer Rolle, eines Pinsels oder eines Glätters aufgetragen wird und vor dem Aushärten mit Siliciumcarbidpulver, meist mit einer Korngröße zwischen 0,1 bis 5 mm, vorzugsweise 0,2 bis 2 mm abgestreut wird. Nach Aushärtung wird das überschüssige Korn abgefegt oder abgesaugt, die Schicht wird erneut mit einer Beschichtungsformulierung, bevorzugt dem Deckschicht-Material über Rollen versiegelt. Es wird bevorzugt eine Beschichtungsformulierung eingesetzt, die der Formulierung für die Deckschicht 3 entspricht, die ebenfalls elektrisch leitfähig modifiziert worden ist.

Die Beschichtungsformulierungen für Deckschicht 3 und Grundierungsschicht 2 der erfindungsgemäßen Bodenbeschichtung sind bevorzugt beide auf Basis von Epoxidharzen. Für beide Schichten werden bevorzugt die nachstehend genannten Stoffe eingesetzt.

Das bevorzugte Material für die elektrisch leitfähige Deckschicht 3 ist eine Epoxidharzformulierung, enthaltend ein Epoxidharz (A), Härter (B) und für Bodenbeschichtungen übliche Zusatzstoffe wie Füllstoffe, Farbstoffe, Pigmente, Entlüfter, Entschäumer und Verlaufsmittel.

Als Epoxidharzkomponente (A) kommen eine Vielzahl der hierfür bekannten Verbindungen in Betracht, die im Mittel mehr als eine Epoxidgruppe, vorzugsweise zwei Epoxidgruppen, pro Molekül enthalten. Es können jedoch auch Mischungen von Polyepoxiden mit Monoepoxiden eingesetzt werden. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungsoder Reaktionsbedingungen keine störenden Nebenreaktionen verursachen, beispielsweise Alkyl- oder Arylsubstituenten, Äthergruppierungen und ähnliche. Bevorzugt weisen die Epoxidverbindungen (A) spezifische Epoxidgruppen-Gehalte von 2 bis 10 mol/kg ("Epoxidäquivalentgewichte" von 100 bis 500 g/mol) auf.

Vorzugsweise handelt es sich dabei um Glycidyläther (A10) von mehrwertigen Phenolen, insbesondere Bisphenolen sowie Novolaken, deren spezifische Epoxidgruppen-Gehalte 2 bis 10 mol/kg, bevorzugt 4 bis 6,7 mol/kg ("Epoxidäquivalentgewichte" von 100 bis 500, insbesondere jedoch 150 bis 250 g/mol) betragen. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-äthan, Bis-(4-hydroxyphenyl)-1,1-isobutan, Bis-(4-hydroxy-3-tert.-butylphenyl)-2,2-propan, Bis-(2-hydroxynaphthyl)-methan, 1,5-Dihydroxynaphthalin, Tris-(4-hydroxyphenyl)methan, Bis-(4-hydroxyphenyl)-äther, Bis-(4-hydroxyphenyl)-sulfon u. a. sowie die Chlorierungs- und Bromierungsprodukte der vorstehend genannten Verbindungen, wie beispielsweise Tetrabrombisphenol A. Ganz besonders bevorzugt werden flüssige Diglycidyläther auf Basis von Bisphenol A und Bisphenol F mit einem spezifischen Epoxidgruppen-Gehalt von 5,0 bis 5,6 mol/kg ("Epoxidäquivalentgewicht" von 180 bis 200 g/mol).

Es können auch Polyglycidyläther (A11) von Polyalkoholen verwendet werden, wie z. B. Äthandiol-1,2-diglycidyläther, Propandiol-1,2-diglycidyläther, Propandiol-1,3-diglycidyl-äther, Butandiol-1,4-diglycidyläther, Pentandiol-1,5-diglycidyläther, Neopentylglykoldiglycidyläther, Hexandiol-1,6-diglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpoly(oxyäthylen-oxypropylen)glykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits und Sorbitols, Polyglycidyläther von oxalkylierten Polyolen (wie z. B. des Glycerins, Trimethylolpropans, Pentaerythrits), Diglycidyläther des Cyclohexandimethanols, Bis-(4-hydroxylcyclohexyl)methans und 2,2-Bis-(4-hydrxycyclohexyl)propans, Polyglycidyläther des Rizinusöls, Triglycidyltris-(2-hydroxyäthyl)-isocyanurat. Ganz besonders bevorzugt werden Polyoxyalkylenglykoldiglycidyläther, und unter diesen Polyoxypropylenglykoldiglycidyläther, mit einem spezifischen Epoxidgruppen-Gehalt von 1,25 bis 6,7, insbesondere von 2,5 bis 3,4 mol/kg ("Epoxidäquivalentgewicht" von 150 bis 800, insbesondere von 300 bis 400 g/mol), eingesetzt.

Der spezifische Epoxidgruppen-Gehalt ist Quotient aus der Stoffmenge an Epoxidgruppen n_{(EP)} und der Masse m des betreffenden Epoxids.

In besonderen Fällen können zusätzlich zu den phenolischen Polyglycidyläthem (A10) oder den von Alkoholen abgeleiteten Polyglycidyläthem (A11) geringe Mengen reaktiver Verdünner (Monoepoxide) (A2) in einem Massenverhältnis von bis zu 30 %, vorzugsweise 10 bis 20 %, bezogen auf die Masse der Polyglycidyläther, mitverwendet werden. Beispiele für geeignete Verbindungen sind Methylglycidyläther, Butylglycidyläther, Allylglycidyläther, Äthylhexylglycidyläther, langkettige aliphatische Glycidyläther, wie Cetylglycidyläther und Stearylglycidyläther, Monoglycidyläther eines höheren isomeren Alkoholgemisches, Glycidyläther einer Mischung von C₁₂- bis C₁₃-Alkoholen, Phenylglycidyläther, Kresylglycidyläther, p-t-Butylphenylglycidyläther, p-Octylphenylglycidyläther, p-Phenyl-phenylglycidyläther, Glycidyläther eines oxalkylierten Laurylalkohols sowie Monoepoxide wie epoxidierte einfach ungesättigte Kohlenwasserstoffe (Butylen-, Cyclohexen- und Styroloxid) und halogenhaltige Epoxide, wie Epichlorhydrin.

Weiterhin können als Epoxidharze auch Poly-(N-glycidyl)-Verbindungen (A12) eingesetzt werden, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomeren, N,N'-Diglycidylderivate von Cycloalkylenhamstoffen und Diglycidylderivate von Hydantoinen u. a.

Weiterhin können auch Polyglycidylester (A13) von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester. Weiterhin seien genannt Glycidylester ungesättigter Carbonsäuren und epoxidierte Ester von ungesättigten Alkoholen bzw. ungesättigten Carbonsäuren.

Besonders bevorzugt werden Epoxidharze (A) ausgewählt aus flüsssigen Diglycidyläthem auf Basis von Bisphenol A und Bisphenol F.

Eine ausführliche Aufzählung der geeigneten Epoxidverbindungen findet sich in dem Handbuch _{"}Epoxidverbindungen und Epoxidharze" von A. M. Paquin, Springer Verlag, Berlin 1958, Kapitel IV, und in Lee und Neville, _{"}Handbook of Epoxy Resins", 1967, Chapter 2.

Als Epoxidhärter-Komponente (B) können für ein Zweikomponenten-Epoxidharz alle bekannten Aminhärtungsmittel für 1,2-Epoxide eingesetzt werden. Beispielhaft seien genannt: aliphatische Amine (B1), wie die Polyalkylenpolyamine, Diäthylentriamin und Triäthylentetramin, Tetraäthylenpentamin, Pentaäthylenhexamin, 2,2,4- und/oder 2,4,Bis(3-aminopropyl)-äthylendiamin, 2-Methyl-pentandiamin (®Dytek A), Oxyalkylenpolyamine wie Polyoxypropylendi- und triamine und 1,13-Diamino-4,7,10-trioxatridecan, cycloaliphatische Amine (B2), wie Isophorondiamin (3,5,5-Trimethyl-3-aminomethyl-cyclohexylamin), 4,4'-Diaminodicyclohexylmethan, 3,3'-Dimethyl-4,4'diaminodicyclohexylmethan, N-Cyclohexyl-1,3-propandiamin, Diaminocyclohexane, insbesondere 1,2-Diaminocyclohexan, 1,4-Diamino-3,6-diäthylcyclohexan, 1,2-Diamino-4-äthylcyclohexan, 1-Cyclohexyl-3,4-diaminocyclohexan, 2,2-Bis-(4-aminocyclohexyl)-propan, 1,3- und 1,4-Bis(aminomethyl)-cyclohexan, Piperazin, N-Aminoäthylpiperazin, TCD-Diamin (= 3(4),8(9)-Bis(aminomethyl)-tricyclo-[5.2.1.0^{2,6}]decan), araliphatische Amine (B3), wie Xylylendiamine (m- und p-Xylylendiamin) und aromatische Amine (B4) wie Phenylendiamine, 4,4'-Oxydianilin und 4,4'-Diaminodiphenylmethan.

Es können bevorzugt auch Mischungen dieser Amine eingesetzt werden, ebenso sind Mischungen von diesen Aminen und Phenylalkanolen wie zum Beispiel Benzylalkohol, Phenyläthanol, 3-Phenylpropanol sowie Phenoxyalkanolen wie 2-Phenoxyäthanol, 2- und 3-Phenoxypropanol geeignet; besonders bevorzugt sind Mischungen mit Benzylalkohol.

Weiterhin kommen in Betracht Addukthärter (B5), die Umsetzungsprodukte von Epoxidverbindungen, insbesondere Glycidyläthem des Bisphenol A und F, mit überschüssigen Aminen sind, beispielsweise Umsetzungsprodukte von Äthylendiamin, 2,2,4-und 2,4,4-Trimethylhexamethylendiamin, Isophorondiamin, 1,2-Diaminocyclohexan, m-Xylylendiamin und/oder Bis(aminomethyl-)cyclohexan mit endständigen Epoxiden, wie z. B. 1,2-Propylenoxid, 1,2-Hexenoxid oder mit Glycidyläthern wie Phenylglycidyläther, Äthylhexylglycidyläther, Butylglycidyläther oder mit Glycidylestern, wie ®Cardura E, oder Polyglycidyläthern bzw. -estern, wie sie bei (A10), (A11) und (A13) beschrieben sind.

Bevorzugt ist der Härter (B5) ein Epoxid-Amin-Addukt aus einem oder mehreren aliphatischen und/oder cycloaliphatischen Polyaminen und einer oder mehreren Epoxidverbindungen mit 1 bis 4 Epoxidgruppen pro Molekül, wobei zur Herstellung des Addukts die Menge der Epoxidverbindungen so gewählt ist, daß je 1 mol des Amins 1 bis 2 mol Epoxidgruppen in der Reaktionsmischung zu dessen Herstellung enthalten sind.

Polyamidoamin- (B6) und Polyimidazolin- (B7) -härter, die für vorliegende Zwecke verwendet werden können, werden durch Kondensation von Polyaminen und Polycarbonsäuren hergestellt, gegebenenfalls unter Zusatz von Monocarbonsäuren, insbesondere durch Kondensation von Polyalkylenpolyaminen mit polymeren Fettsäuren, erhalten durch katalytische Polymerisation von ein- oder mehrfach ungesättigten Fettsäuren oder durch Copolymerisation dieser Fettsäuren mit polymerisationsfähigen Verbindungen, wie z. B. Styrol.

Als Härter geeignete Mannich-Basen (B8) werden durch Kondensation von (primären) Polyaminen mit bevorzugt zwei primären Aminogruppen, die an aliphatische Kohlenstoffatome gebunden sind, vorzugsweise Diäthylentriamin, Triäthylentetramin, Isophorondiamin, 2,2,4- bzw. 2,4,4-Trimethylhexamethylendiamin, 1,3- und 1,4-Bis(aminomethyl)cyclohexan, insbesondere m- und p-Xylylendiamin mit Aldehyden, vorzugsweise Formaldehyd und ein- oder mehrwertigen Phenolen mit mind. einer aldehydreaktiven Kemstelle, z. B. die verschiedenen Kresole und Xylenole, p-tert.-Butylphenol, Resorcin, 4,4'-Dihydroxydiphenylmethan, 4,4'-Dihydroxydiphenyl-2,2-propan, vorzugsweise aber Phenol, hergestellt.

Besonders bevorzugt als Härtungsmittel sind Härter auf Basis von TCD-Diamin, Mannich-Basen z. B. auf Basis von Phenol und/oder Resorcin, Formaldehyd und m-Xylylendiamin sowie N-Aminoäthylpiperazin und Abmischungen von N-Aminoäthylpiperazin mit Nonylphenol und/oder Benzylalkohol.

Weitere bevorzugte Härter (B) sind aminterminierte flüssige Polymere auf Basis von Butadien oder aminterminierte flüssige Acrylnitril/Butadien-Copolymere.

Die erfindungsgemäßen Beschichtungen werden bevorzugt als Zweikomponenten-Systeme formuliert, wobei die Additive üblicherweise zu den Epoxidharzkomponenten (A) hinzugefügt werden, und die Mischungen von (A) und den Additiven und Hilfsstoffen (C) erst unmittelbar vor der Applikation mit den Härtern (B) gemischt werden.

Die Epoxidharzformulierung enthält dabei noch weitere übliche Zusatzstoffe neben den Epoxidharzen (A), wie beispielsweise Beschleuniger oder Härtungskatalysatoren (C4), weitere Härter (C2) und zusätzliche härtbare Harze oder Extenderharze (C3), wie Kohlenwasserstoffharze, Polyurethanharze, Phenoxyharze und flüssige Polymere auf Basis von Butadien, flüssige Acrylnitril-Butadien-Copolymere, und Mischungen der genannten Harze, sowie die üblichen Lackadditive (C1) wie Pigmente, Pigmentpasten, Farbstoffe, Antioxidantien, Stabilisierungsmittel, Verlauf- bzw. Verdickungsmittel (Thixotropierungsmittel), Entschäumer und/oder Netzmittel, Füllstoffe, Weichmacher oder flammhemmende Stoffe. Diese Additive können den härtbaren Mischungen gegebenenfalls längere Zeit vorher oder erst unmittelbar vor der Verarbeitung zugegeben werden.

Als Beschleuniger (C4) insbesondere für die Härtung mit Aminhärtungsmitteln, können beispielsweise Benzylalkohol, Phenole und Alkylphenole mit 1 bis 12 C-Atomen in der Alkylgruppe, Kresol, die verschiedenen Xylenole, Nonylphenol, Polyphenole wie Bisphenol A und F, Hydroxylgruppenhaltige aromatische Carbonsäuren wie Salicylsäure, m-Hydroxybenzoesäure, p-Hydroxybenzoesäure sowie tertiäre Amine, wie Benzyldimethylamin, 1,3,5-Tris(dimethylamino)phenol, Mischungen aus N-Aminoäthylpiperazin und Alkanolaminen (wie beschrieben in der DE-A 2 941 727), ®Accelerator 399 (Texaco Chemical Company) und dergleichen eingesetzt werden. Beschleuniger können auch Bestandteile der Härter-Komponente (B) sein.

Zusätzlich härtbare Harze (C3) sind zum Beispiel Kohlenwasserstoffharze, Phenoxyharze, Phenolharze, Polyurethanharze, Polysulfide (®Thiokol), reaktive, flüssige Polymere des Butadiens bzw. entsprechende Acrylnitril/Butadien-Copolymere (®Hycar-Typen), während als übliche Extenderharze hier unter anderem nichtreaktive Epoxidharz-Modifizierungsmittel, wie _{"}Pine oil" (aus Nadelhölzern wie Kiefern, Föhren oder Pinien durch trockene Destillation erhaltenes Rohterpentin), Teere, Phthalsäureester und Cumaronöle genannt seien. Diese Harze und Modifizierungsmittel können einzeln oder in Mischungen zugesetzt werden.

### Die nachfolgend genannten Additive (C1) werden üblicherweise zugesetzt:

Als Verlaufmittel (C10) bzw. Entlüfter/Entschäumer (C11) können zum Beispiel Acetale, wie Polyvinylformal, Polyvinylacetal, Polyvinylbutyral, Polyvinylacetobutyral, Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Massenanteilen von 0,1 bis 4 % vorzugsweise 0,2 bis 2 %, bezogen auf die Gesamtmasse zugesetzt werden.

Als Haftvermittler und Hydrophobierungsmittel (C12) können beispielsweise Silane eingesetzt werden. Diese können sowohl mit dem anorganischen Untergrund als auch mit den organischen Polymeren oder den darin enthaltenen Füllstoffen unter Ausbildung von chemischen Bindungen reagieren. Durch die Haftungsverbesserung können die mechanischen Werte, insbesondere nach Feuchtigkeitsbeanspruchung, verbessert werden. Entsprechende Produkte werden z. B. unter der Bezeichnung ®Dynasylan von Hüls AG, bzw. als ®Silan von Degussa AG angeboten.

Stabilisatoren (C13) sind z. B. aromatische Diketone wie Benzoin, die punktuelle Zersetzung unterbinden und damit die Porenbildung verringern oder vermeiden. Diese Stabilisatoren werden im allgemeinen in Massenanteilen von 0,1 bis 3, vorzugsweise von 0,2 bis 2 %, bezogen auf die Masse des gesamten Bindemittels (Komponenten (A) und (B)), eingesetzt.

Die zugesetzten Farbstoffe und Pigmente (C14) können sowohl anorganischer als auch organischer Natur sein. Beispielsweise seien genannt Titandioxid, Zinkoxid und Farbpigmente nach RAL.

Geeignete Füllstoffe (C15) sind zum Beispiel Quarzmehl, Silikate, Kreide, Gips, Kaolin, Glimmer, Schwerspat, organische Füllstoffe wie z. B. Polyamidpulver, organische und anorganische Fasern und dergleichen.

Als Thixotropier- und Verdickungsmittel (C16) können beispielsweise ®Aerosil (hochdisperses Siliciumdioxid z. B. die Typen 150, 200, R 202, R 805 der Degussa) oder Bentonit-Typen (z. B. ®Sylodex 24 von Grace, ®Bentone, NL Chemicals) verwendet werden.

Als elektrisch leitfähige Füllstoffe (C17) werden Ruße, Graphite, Metallpulver oder Kohlenstofffasern (auf Basis von Polyacrylnitrilfasern oder Pechfasern; auch Graphitfasern) der Epoxidharzformulierung hinzugesetzt. Die mittlere Länge der Kohlenstoffasern liegt üblicherweise im Bereich von 50 bis 3.000 µm. Besonders geeignet sind mittlere Faserlängen größer als 500 µm. Der Massenanteil der Kohlenstofffasem in den Additiven (C1) liegt besonders vorteilhaft bei 0,2 bis 4 %, insbesondere zwischen 0,5 und 2 %. Zur Herstellung von leitfähigen Bodenbeschichtungen sollen Kohlenstofffasern in solchen Mengen zugegeben werden, daß die gehärtete Beschichtung einen Oberflächenwiderstand (gemessen nach DIN 53482) von 10³ bis 10⁹ Ohm und/oder einen Ableitwiderstand (gemessen nach DIN 51953) von 10³ bis 10⁹ Ohm hat.

Weiterhin kann die Epoxidharzformulierung auch ein oder mehrere Lösungsmittel (C18) enthalten, deren Massenanteil in der Formulierung üblicherweise zwischen 0,1 und 20 % liegt. Als Lösungsmittel eignen sich einwertige Alkohole, wie z. B. Äthanol, Ätheralkohole wie z. B. Butylglykol oder auch Aromaten (Xylol, Toluol) sowie Benzine.

Zur Herstellung der erfindungsgemäßen härtbaren Mischungen werden die Epoxidharz-Komponenten (A) zusammen mit den genannten Additiven und Füllstoffen mit Hilfe geeigneter Aggregate (Dissolver, Rührer, Kneter, Walzen) gemischt. Bei Komponenten mit niedriger Viskosität kann dies in Substanz erfolgen. Es kann notwendig sein, durch eine Kühlung des formulierten Harz-Systems eine vorzeitige Reaktion der Komponenten zu vermeiden.

Beide Komponenten, Epoxidharzformulierung (Mischung der Bestandteile A und C) und Aminhärter (Komponente B), werden getrennt gelagert, die Mischung wird kurz vor Gebrauch durch Vermischen der beiden Komponenten hergestellt. Dabei werden die Mengen der beiden Komponenten so gewählt, daß die Härtermenge (Menge der Aminogruppen in B) stöchiometrisch der Menge der Epoxidgruppen in der Epoxidharzformulierung entspricht.

Nach dem Mischen dieser beiden Komponenten hat die Mischung je nach Einstellung noch eine Verarbeitungszeit von 0,25 bis 2 Stunden und härtet dann bei Raumtemperatur innerhalb eines Tages zu einer belastbaren Beschichtung durch. Die endgültige Durchhärtung erfolgt innerhalb von 3 bis 28 Tagen.

Für die Zweikomponenten-Epoxidharzformulierung, die sowohl für die leitfähige Deckschicht 3 als auch für die leitfähige Grundierung 2 eingesetzt wird, wird die folgende Zusammensetzung bevorzugt (Massenanteile bezogen auf die Masse der Mischung, wobei die Summe der angegebenen Anteile für alle Bestandteile 100 % betragen muß):
a) 5 bis 80 % Komponente A (Epoxidharz)
b) 0 bis 10 % Beschleuniger (C4)
c) 0,1 bis 4 % Verlaufmittel (C10), Entlüfter, Entschäumer (C 11)
d) 0,1 bis 5 % Haftvermittler, Hydrophobierungsmittel (C12)
e) 0 bis 30 % Farbstoffe und Pigmente (C14)
f) 5 bis 70 % Füllstoffe (C15)
g) 0 bis 7 % Thixotropier- und Verdickungsmittel (C16)
h) 0,3 bis 30 % Elektrisch leitfähige Füllstoffe (C17)
i) 0 bis 30 % Lösungsmittel (C 18)
j) 1 bis 50 % Komponente B (Epoxy-Amin-Addukt mit endständigen Aminogruppen)

Die erfindungsgemäßen Bodenbeschichtungen werden insbesondere in Produktionsbetrieben eingesetzt, in denen wassergefährdende Stoffe gelagert und verarbeitet werden. Dies sind speziell chemische Fabriken, sowie Lager- und Werkhallen, Werkstätten, Kraftwerke, Lebensmittelbetriebe und EDV-Räume der metallverarbeitenden Industrie, Pharmaindustrie, Bauindustrie, Behörden oder der Elektronikindustrie.

Die Erfmdung wird durch die nachfolgenden Beispiele näher erläutert. Dabei bedeuten "Teile" stets Massenanteile. Die gemessenen Glasübergangstemperaturen (T_{g}) werden durch DSC-Messung (zweites Aufheizen, Heizrate 20 K/min) bestimmt.

### Beispiele:

### Beispiel 1: Epoxidharzformulierung für eine elektrisch leitfähige Grundierung 2

Die nachstehend genannten Bestandteile wurden in einem Dissolver bei Raumtemperatur innerhalb von 30 Minuten vermischt:

| | |
|---|---|
| 50,0 Teile | Epoxidharz (flüssiges Diepoxidharz auf Basis von Bisphenol A, spezifischer Epoxidgruppen-Gehalt 5,26 mol/kg) |
| 20,0 Teile | Naturgraphit (mittlere Teilchengröße 32 bis 75 µm) |
| 30,0 Teile | Äthanol |
| **100,0 Teile** | **Epoxidharzformulierung 1 (spezifischer Epoxidgruppen-Gehalt 2,67 mol/kg, "Epoxidäquivalent": 374 g/mol)** |

Zu 100 Teilen dieser Epoxidharzformulierung 1 wurden unmittelbar vor der Applikation 31 Teile eines Addukthärters mit einem spezifischen Aminogruppen-Gehalt von 8,7 mol/kg (Aminäquivalent von 115 g/mol) auf der Basis von Isophorondiamin und dem Diglycidyläther von Bisphenol A zugemischt, die Mischung wurde gut homogenisiert.

### Beispiel 2: Epoxidharzformulierung für eine leitfähige Deckschicht 3

Die nachstehend genannten Bestandteile wurden in einem Dissolver zu einer leitfähigen Epoxidharzformulierung vermischt:

| | |
|---|---|
| 40,0 Teile | Epoxidharz (Flüssigharz auf Basis von Bisphenol A, spezifischer Epoxidgruppen-Gehalt 5,26 mol/kg) |
| 20,0 Teile | Hexandioldiglycidyläther (Reaktivverdünner) |
| 0,4 Teile | Byk® A 500 (Entlüfteradditiv) |
| 0,6 Teile | Byk® W 930 (Benetzungsadditiv) |
| 0,6 Teile | Aerosil® 300 (fein verteiltes Siliciumdioxid) |
| 6,9 Teile | anorg. Pigment RAL 7032 |
| 30,0 Teile | Quarzmehl W3 |
| 1,0 Teile | Kreca Chop® 103 T (Kohlenstoff Stapelfasern mit einer mittleren Länge von 3 mm) |
| **100,0 Teile** | **Epoxidharzformulierung 2 (spezifischer Epoxidgruppen-Gehalt 3,42 mol/kg, "Epoxidäquivalent": 292 g/mol)** |

Zu diesen 100 Teilen der Epoxidharzformulierung 2 wurden unmittelbar vor der Applikation 40 Teile eines Addukthärters auf der Basis von Isophorondiamin und dem Diglycidyläther von Bisphenol A, mit einem spezifischen Aminogruppen-Gehalt von 8,7 mol/kg ("Aminäquivalent" von 115 g/mol) gemischt, die erhaltene Mischung wurde so homogenisiert, daß mit dem bloßen Auge keine Inhomogenitäten mehr erkennbar waren..

### Beispiel 3: Applikation und Prüfung der Beschichtungen

Auf eine nach DIN 28052-1, 2 gestrahlte Betonoberfläche **1** von 5 × 5 m² wurde die Beschichtungsformulierung für die leitfähige Grundierung **2** aus Beispiel 1 aufgerollt. Die Mischung aus Beispiel 1 hatte bei Raumtemperatur eine Topfzeit von 40 min. Die Beschichtung war bei Raumtemperatur nach 12 Stunden staubtrocken und nach 24 h vollständig durchgehärtet und zeigte im ausgehärteten Zustand einen Ableitwiderstand von 4 bis 100 kOhm (Extremwerte bei Messung an 20 verschiedenen Stellen). Der Verbrauch der Grundierung lag bei 0,3 kg/m².

24 Stunden nach dem beendeten Auftrag der Grundierung 2 wurde die Mischung für die Deckschicht 3 (Beispiel 2) mittels eines Zahnglätters in einer Schichtdicke von 1,5 bis 2 mm aufgetragen.

Die Mischung aus Beispiel 2 hatte bei Raumtemperatur eine Topfzeit von 35 Min. Sie war bei Raumtemperatur nach einem Tag vollständig durchgehärtet. Der Tg-Wert, gemessen an einer Probe, die mit derselben Schichtdicke auf eine Glasplatte aufgetragen worden war, betrug ca. 37 °C. Der Ableitwiderstand dieses 2-Schichtsystems betrug weniger als 10⁶ Ohm (Messung an 20 Stellen der Beschichtung gleichmäßig über die Fläche verteilt) und erfüllte somit die Anforderungen nach DIN 53482 bzw. DIN 51953.

### Bezugszeichenliste

- 1: Untergrund
- 2: elektrisch leitfähige Grundierungsschicht
- 3: elektrisch leitfähige Deckschicht

## Patentansprüche

1. Bodenbeschichtungen umfassend eine elektrisch leitfähige Grundierungsschicht (2) und eine elektrisch leitfähige flüssigkeitsdichte Deckschicht (3).

2. Verfahren zur Herstellung von Bodenbeschichtungen nach Anspruch 1, **dadurch gekennzeichnet, daß** nacheinander eine Beschichtungsformulierung für eine elektrisch leitfähige Grundierungsschicht (2) und eine Beschichtungsformulierung für eine elektrisch leitfähige flüssigkeitsdichte Deckschicht (3) auf einen Boden (1) aufgetragen und gehärtet werden.

3. Verfahren nach Anspruch 2, **dadurch gekennzeichnet, daß** nach Aushärtung der Deckschicht (3) auf diese erneut eine Beschichtungsformulierung für die leitfähige Grundierung aufgetragen und Siliciumcarbid in Pulverform aufgestreut wird und nach Aushärtung dieser Schicht und Absaugen des Überschusses an Siliciumcarbid-Pulver eine Rollversiegelung der Oberfläche zur Realisierung einer rutschhemmenden Schicht erfolgt.

4. Verfahren nach Anspruch 3, **dadurch gekennzeichnet, daß** die Beschichtungsformulierung für die Rollversiegelung elektrisch leitfähig ausgerüstet ist.

5. Beschichtungsformulierungen für Bodenbeschichtungen nach Anspruch 1, **dadurch gekennzeichnet, daß** die Beschichtungsformulierung für die Grundierungsschicht (2) und/oder die Beschichtungsformulierung für die Deckschicht (3) Epoxidharze enthalten.

6. Beschichtungsformulierungen nach Anspruch 5, **dadurch gekennzeichnet, daß** die Beschichtungsformulierung für die Grundierungsschicht (2) wäßrige Epoxidharzdispersionen enthält.

7. Beschichtungsformulierungen nach Anspruch 5, **dadurch gekennzeichnet, daß** die Beschichtungsformulierungen für Deckschicht (3) und/oder die Grundierungsschicht (2) Mischungen mit Massenanteilen von
a) 5 bis 80 % Epoxidharz (A)
b) 0 bis 10 % Beschleuniger (C4)
c) 0,1 bis 4 % Verlaufmittel (C10) sowie Entlüfter und Entschäumer (C 11)
d) 0,1 bis 5 % Haftvermittler und Hydrophobierungsmittel (C 12)
e) 0 bis 30 % Farbstoffe und Pigmente (C 14)
f) 5 bis 70 % Füllstoffe (C 15)
g) 0 bis 7 % Thixotropierungsmittel und Verdicker (C16)
h) 0,3 bis 30 % elektrisch leitfähige Füllstoffe (C17)
i) 0 bis 30 % Lösungsmittel (C18)
j) 1 bis 50 % Härter (B) für das Epoxidharz
enthalten, wobei die Summe der Massenanteile stets 100 % ergibt.

8. Beschichtungsformulierungen nach Anspruch 7, **dadurch gekennzeichnet, daß** der Härter (B) ein Epoxid-Amin-Addukt ist aus einem oder mehreren aliphatischen und/oder cycloaliphatischen Polyaminen und einer oder mehreren Epoxidverbindungen mit 1 bis 4 Epoxidgruppen pro Molekül, wobei zur Herstellung des Addukts die Menge der Epoxidverbindungen so gewählt ist, daß je 1 mol des Amins 1 bis 2 mol Epoxidgruppen in der Reaktionsmischung zu dessen Herstellung enthalten sind.

9. Beschichtungsformulierungen nach Anspruch 7, **dadurch gekennzeichnet, daß** die Beschleuniger (C4) ausgewählt sind aus Benzylalkohol, Salicylsäure und Nonylphenol.

10. Beschichtungsformulierungen nach Anspruch 7, **dadurch gekennzeichnet, daß** die elektrisch leitfähigen Füllstoffe (C 17) ausgewählt sind aus Kohlenstoffasern auf Basis von Polyacrylnitrilfasern, Kohlenstoffasern auf Basis von Pechfasern, Graphitfasern, Graphiten, Rußen und Metallpulvern sowie deren Mischungen.

11. Beschichtungsformulierungen nach Anspruch 7, **dadurch gekennzeichnet, daß** sie weitere Harze (C3) ausgewählt aus Kohlenwasserstoffharzen, Polyurethanharzen, Phenoxyharzen und flüssigen Polymeren des Butadiens sowie flüssigen Acrylnitril-Butadien-Copolymeren und deren Mischungen enthalten.

12. Beschichtungsformulierungen nach Anspruch 7 oder 8, **dadurch gekennzeichnet, daß** die Härter (B) aminterminierte flüssige Polymere auf Basis von Butadien oder aminterminierte flüssige Acrylnitril/Butadien-Copolymere enthalten.

13. Beschichtungsformulierungen nach Anspruch 7, **dadurch gekennzeichnet, daß** die Epoxidharze (A) ausgewählt sind aus flüsssigen Diglycidyläthem auf Basis von Bisphenol A und Bisphenol F.

14. Beschichtungsformulierungen nach Anspruch 13, **dadurch gekennzeichnet, daß** sie zusätzlich zu den Epoxidharzen (A) Monoepoxide (A2) als Reaktivverdünner enthalten in einem Massenverhältnis bezogen auf die Masse der Epoxidharze (A) von bis zu 30 %.

15. Verwendung von Bodenbeschichtungen nach Anspruch 1 in Produktionsbetrieben, in denen wassergefährdende Stoffe gelagert und verarbeitet werden.

16. Verwendung von Bodenbeschichtungen nach Anspruch 1 in chemischen Fabriken, sowie in Lager- und Werkhallen, Werkstätten, Kraftwerken, Lebensmittelbetrieben und EDV-Räumen der metallverarbeitenden Industrie, Pharmaindustrie, Bauindustrie, Behörden oder der Elektronikindustrie.
